# EUROPÄISCHE PATENTSCHRIFT

(11) **EP 0 459 162 B1**
(45) Veröffentlichungstag und Bekanntmachung des Hinweises auf die Patenterteilung: **02.11.1994**
(21) Anmeldenummer: 91106971.4
(22) Anmeldetag: 30.04.1991
(51) Int. Cl.: H01M 2/12, H01M 2/04

(54) **Bleiakkumulator mit Entgasungssystem**
Lead accumulator with ventilation system
Accumulateur en plomb avec système de ventilation

(30) Priorität: 17.05.1990 DE 9005603 U
(43) Veröffentlichungstag der Anmeldung: 04.12.1991
(73) Patentinhaber: Accumulatorenwerke Hoppecke Carl Zoellner & Sohn GmbH & Co. KG, D-59914 Brilon (DE)
(72) Erfinder: Bernardi, Walter, W-5790 Brilon (DE); Bode, Cordula, W-5790 Brilon (DE); Cramer, Wilhelm, W-5790 Brilon 3 (DE)
(74) Vertreter: Stenger, Watzke & Ring Patentanwälte

(56) Entgegenhaltungen:
- EP-A- 0 090 570
- EP-A- 0 107 469
- EP-A- 0 132 949
- DE-A- 3 112 512
- DE-U- 9 005 603
- US-A- 4 613 550
- PATENT ABSTRACTS OF JAPAN vol. 12, no. 228 (E-627)(3075) 28. Juni 1988& JP-A-63 21 742 (SHIN KOBE ELECTRIC MACH CO ) 29. Januar 1988

## Beschreibung

Die Erfindung betrifft einen Bleiakkumulator mit einem mehrere Zellen aufnehmenden Gehäuse sowie mit einem das Gehäuse abschließenden Deckel, in dem zwischen einem Unterdeckel und einem dazu im Abstand angeordneten Oberdeckel ein Hohlraum zur Säureabscheidung ausgebildet ist und welcher mit jeweils einen Zündschutz aufweisenden Entgasungsöffnungen versehen ist, wobei jeweils mehrere Zellen als Teil der Gesamtzellenzahl mit einer gemeinsamen Entgasungsöffnung zusammengefaßt sind, wobei die Zusammenfassungen untereinander voneinander unabhängig sind, und welcher ggfs. jeweils verschließbare Füll- und Kontrollöffnungen für die Zellen aufweist.

Aus der EP-A-0 107 469 ist ein Bleiakkumulator bekannt, in dem insgesamt sechs Zellen in einer Reihe hintereinander angeordnet sind. Das die Zellen aufnehmende Gehäuse ist dabei durch einen Deckel abgeschlossen, wobei zwischen einem Unterdeckel und zwei dazu im Abstand angeordneten Oberdeckeln jeweils ein Hohlraum zur Säureabscheidung ausgebildet ist. Dabei sind jeweils drei Zellen zusammengefaßt und durch einen gemeinsamen Oberdeckel abgeschlossen, wobei die Hohlräume dieser drei Zellen untereinander verbunden sind. Im Hohlraum einer der drei Zellen ist dabei eine Entgasungsöffnung mit einem Zündschutz angeordnet, durch die die austretenden Gase entweichen können.

Bei dem bekannten Bleiakkumulator sind zwar jeweils drei Zellen zusammengefaßt, doch die gemeinsame Entgasungsöffnung mit dem Zündschutz ist nur im Bereich eines der drei Hohlräume angeordnet.

Davon ausgehend liegt der Erfindung die **Aufgabe** zugrunde, einen kompakten Bleiakkumulator mit einem hohen Sicherheitsstandard im Hinblick auf die Entgasung des Bleiakkumulators mit der Gefahr einer möglichen Zündung von außen zu schaffen.

Als technische **Lösung** wird mit der Erfindung vorgeschlagen, daß die Zellen in zwei Reihen angeordnet sind, wobei die einander benachbarten Zellen der Reihen zusammengefaßt sind, und daß die Entgasungsöffnungen im Bereich des Zusammenschlusses der zugehörigen Hohlräume zwischen den Zellenpaaren jeweils auf der Längsmittellinie zwischen den beiden Reihen liegen..

Auf diese Weise ist ein kompakter Bleiakkumulator mit einem hohen Sicherheitsstandard geschaffen, was die Gefahr einer möglichen Zündung der bei der Entgasung austretenden Gase betrifft. Da die Zellen erfindungsgemäß in zwei Reihen angeordnet sind, stellt dies eine konstruktiv einfache Möglichkeit zum entsprechenden Zusammenfassen der Zellen dar. Da jeweils zwei Zellen eine gemeinsame Entgasungsöffnung mit einem Zündschutz aufweisen, ist dadurch der bereits erwähnte hohe Sicherheitsstandard gewährleistet. Dadurch werden nur relativ geringe Gasmengen abgegeben, so daß sich der erfindungsgemäße Bleiakkumulator insbesondere als wartungsfreie Starterbatterie für den Einsatz in Nutzkraftwagen mit einer Kapazität von mehr als 100 Ah eignet.

In einer bevorzugten Weiterbildung sind mehrere einzelne Oberdeckel für die jeweils zusammengefaßten Zellen vorgesehen. Vorzugsweise ist dabei der Unterdeckel im wesentlichen flach ausgebildet und die einzelnen Oberdeckel stehen unter Belassung von Zwischenabständen über den Unterdeckel kappenartig über. Auf diese Weise ist das sogenannte Monodeckelprinzip oder Flachdeckelprinzip realisiert. Dadurch können alle Akkumulatorbefestigungsmöglichkeiten angewendet werden, die bei Nutzkraftwagen üblich sind, ohne daß diese geändert werden müssen. Insbesondere ist es möglich, die Befestigung des Akkumulators im Nutzkraftwagen mittels Über-Kopf-Spannelemente vorzunehmen.

Ein Ausführungsbeispiel eines erfindungsgemäßen Bleiakkumulators wird nachfolgend anhand der Zeichnungen beschrieben. In diesen zeigt :
- Fig. 1: eine Draufsicht auf einen Bleiakkumulator mit einer Doppelzellenreihe;
- Fig. 2: eine Seitenansicht des Deckels des Bleiakkumulators in Fig. 1;
- Fig. 3: ein Schnitt entlang der Linie III-III in Fig. 1 durch die Entgasungsöffnung;
- Fig. 4: einen Schnitt entlang der Linie IV-IV in Fig. 1 durch die Füll- und Kontrollöffnung;
- Fig. 5: eine Unteransicht eines als Verschlußdeckel ausgebildeten Oberdeckels.

Ein Bleiakkumulator besteht aus einem Gehäuse 1 aus Kunststoff. In diesem Gehäuse 1 sind insgesamt sechs Zellen Z1 bis Z6 in einer Doppelreihe R1,R2 angeordnet. Die einander benachbarten Zellen Z1 bis Z6 in den beiden Reihen R1, R2 bilden somit jeweils Zellen-Paare Z1,Z4 bzw. Z2,Z5 bzw. Z3,Z6. Abgeführt wird die Zellenspannung über zwei Pole 2.

Das oben offene Gehäuse 1 ist durch einen Deckel 3 ebenfalls aus thermoplastischem Kunststoff abgeschlossen. Dieser Deckel 3 setzt sich dabei zusammen aus einem Unterdeckel 3′ sowie drei einzelnen, kappenartigen Oberdeckeln 3˝, wobei letztere mit dem Unterdeckel 3′ verschweißt sind, der hinwiederum mit dem Gehäuse 1 ebenfalls dicht verschweißt ist.

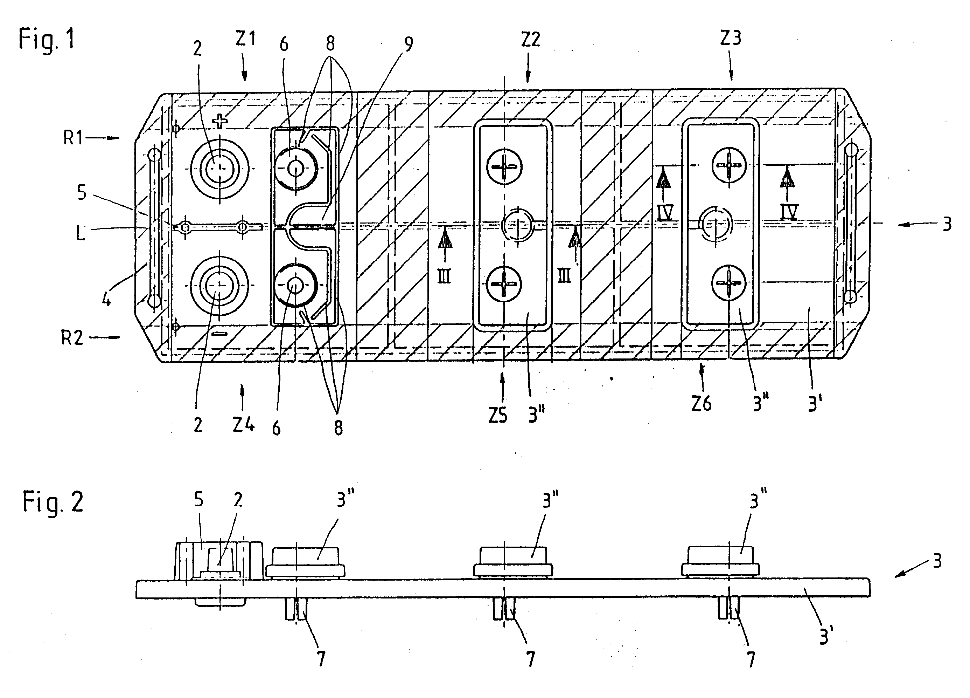

Der Unterdeckel 3′ ist im wesentlichen flach ausgebildet und weist endseitig jeweils einen integrierten Griff 4 auf. Zwischen den beiden Polen 2 ist auf der Oberseite des Unterdeckels 3˝ ein Schutzsteg 5 angeformt. Im Bereich der Zellen Z1 bis Z6 weist der Unterdeckel 3′ jeweils eine Öffnung 6 zum Entgasen der Zellen sowie als Rücklauf für die kondensierte Säure auf. Zu diesem Zweck ist der Unterdeckel 3′ im Bereich dieser Öffnungen 6 trichterförmig ausgebildet und es ist jeweils ein nach unten gerichteter Rohrstutzen 7 angeformt. Der Rohrstutzen 7 kann dabei auch durch Weglassen auf die alleinige Öffnung 6 im Unterdeckel 3′ reduziert sein. Wie in Fig. 1 bei dem ganz linken Zellenpaar Z1,Z4, bei dem der Oberdeckel 3˝ weggelassen ist, zu erkennen ist, weist die Oberseite des Unterdeckels 3′ im Bereich der beiden Öffnungen 6 nach oben gerichtete Stege 8 auf, welche ein Labyrinth für die Säureabscheidung definieren. Die den beiden Öffnungen 6 zugeordneten Labyrinthe münden dabei in einem gemeinsamen Sammelraum 9 auf der Längsmittellinie L zwischen den beiden Reihen R1,R2.

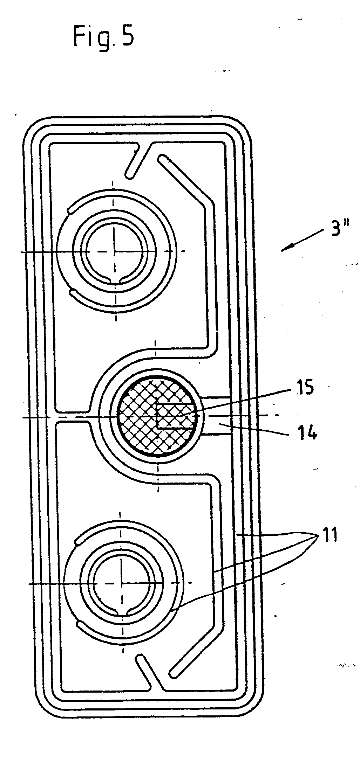

Die drei Oberdeckel 3˝ decken jeweils die Öffnungs-Paare 6 des Unterdeckels 3′ dichtend ab und definieren dazwischen jeweils einen Hohlraum 10. Die Unterseiten der Oberdeckel 3˝ weisen dabei jeweils Stege 11 auf, die mit den Stegen 8 des Unterdeckels 3′ korrespondieren und die aneinanderliegende Schweißflächen beim Verbinden der Oberdeckel 3˝ mit dem Unterdeckel 3′ bilden. Dies läßt insbesondere die Unteransicht des Oberdeckels 3˝ in Fig. 5 erkennen. Die Stege 8 und 11 definieren somit das im Hohlraum 10 ausgebildete Labyrinth mit dem gemeinsamen Sammelraum 9.

Die Oberdeckel 3˝ weisen oberhalb der Öffnungen 6 jeweils eine Füll- und Kontrollöffnung 12 auf, welche mit einem in Fig. 1 angedeuteten Verschlußstopfen verschlossen werden können. Zu diesem Zweck sind die Füll- und Kontrollöffnungen 12 mit einem Innengewinde 13 versehen. Um Säureaustritt aus den Zellen Z1 bis Z6 an die Umgebung und Flüssigkeitseintritt von außen in die Zellen Z1 bis Z6 zu verhindern, können abdichtende O-Ringe vorgesehen sein, die ebenfalls nicht dargestellt sind.

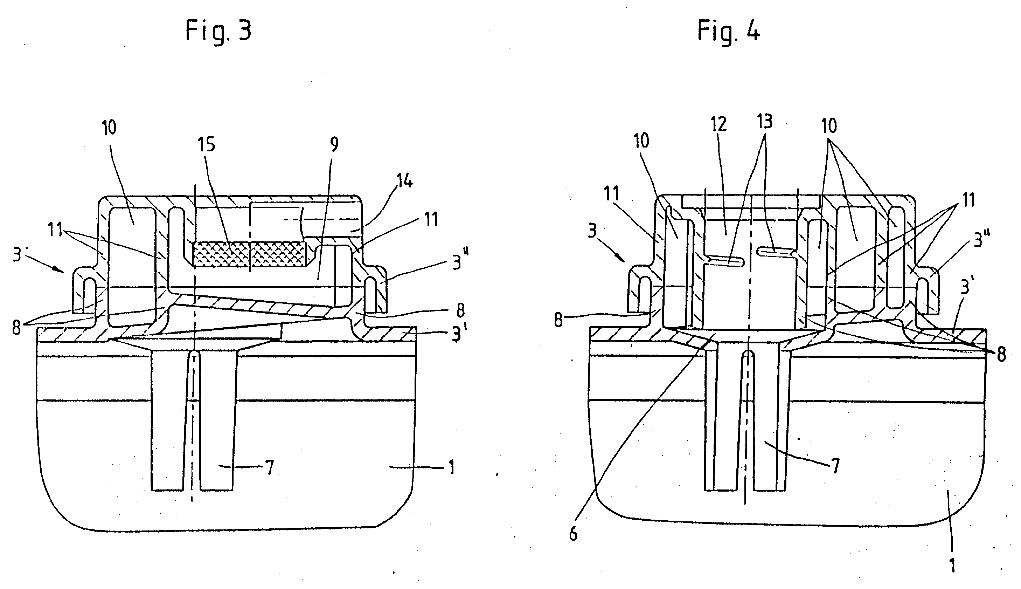

Im Bereich der Sammelräume 9 weisen die Oberdeckel 3˝ jeweils eine Entgasungsöffnung 14 auf, wie insbesondere Fig. 3 erkennen läßt. Dieser Entgasungsöffnung 14 ist ein Zündschutz 15 zugeordnet, welcher beispielsweise aus Polyäthylen oder gesintertem Polypropylen bestehen kann. Dabei ist jeweils jedem der drei Zellenpaaren Z1,Z4 bzw. Z2,Z5 bzw. Z3,Z6 jeweils eine Entgasungsöffnung 14 zugeordnet, die für die Entgasung sorgt, nachdem der aus den Öffnungen 6 nach oben austretende Gassäurenebel in dem durch die Stege 8,11 definierten Labyrinth kondensiert und die kondensierte Säure wieder zurückgeführt worden ist.

Wie insbesondere in der Seitenansicht gemäß Fig. 2 erkennbar ist, stehen die drei Oberdeckel 3˝ kappenartig über die Oberseite des im wesentlichen flachen Unterdeckels 3′. Diejenigen Bereiche, die somit nicht durch Oberdeckel 3˝ abgedeckt werden, können somit als Befestigungsbereiche für Über-Kopf-Spannelemente benutzt werden, um den Bleiakkumulator beispielsweise in einem Nutzkraftwagen sicher zu befestigen. Die entsprechenden Befestigungsbereiche sind in Fig. 1 schraffiert angedeutet.

Der so ausgebildete Bleiakkumulator bringt den Vorteil mit sich, daß durch die Zusammenfassung jeweils zweier Zellen Z1,Z4 bzw. Z2,Z5 bzw. Z3,Z6 nur relativ geringe Gasmengen durch die entsprechenden Gasungsöffnungen 14 entweichen, so daß damit eine große Sicherheit gewährleistet ist. Darüber hinaus ist durch die spezielle Ausbildung des Deckels 3 eine sichere Befestigung in einem Nutzkraftwagen gewährleistet. Darüber hinaus kann bei dem Bleiakkumulator eine Dichtigkeitsprüfung durchgeführt werden, wie sie in dem DE-GM 84 30 246 beschrieben ist.

## Patentansprüche

1. Bleiakkumulator
mit einem mehrere Zellen (Z1 bis Z6) aufnehmenden Gehäuse (1)
sowie mit einem das Gehäuse (1) abschließenden Deckel (3), in dem zwischen einem Unterdeckel (3′) und einem dazu im Abstand angeordneten Oberdeckel (3˝) ein Hohlraum (10) zur Säureabscheidung ausgebildet ist und
welcher mit jeweils einen Zündschutz (15) aufweisenden Entgasungsöffnungen (14) versehen ist, wobei jeweils mehrere Zellen (Z1,Z4;Z2,Z5;Z3,Z6) als Teil der Gesamtzellenzahl mit einer gemeinsamen Entgasungsöffnung (14) zusammengefaßt sind, wobei die Zusammenfassungen untereinander voneinander unabhängig sind, und
welcher ggfs. jeweils verschließbare Füll- und Kontrollöffnungen (12) für die Zellen (Z1 bis Z6) aufweist,
**dadurch gekennzeichnet**,
daß die Zellen (Z1 bis Z6) in zwei Reihen (R1,R2) angeordnet sind, wobei die einander benachbarten Zellen (Z1,Z4; Z2,Z5;Z3,Z6) der Reihen (R1,R2) zusammengefaßt sind, und daß die Entgasungsöffnungen (14) im Bereich des Zusammenschlusses der zugehörigen Hohlräume (10) zwischen den Zellenpaaren (Z1,Z4;Z2,Z5;Z3,Z6) jeweils auf der Längsmittellinie (L) zwischen den beiden Reihen (R1,R2) liegen.

2. Bleiakkumulator nach Anspruch 1, dadurch gekennzeichnet, daß mehrere einzelne Oberdeckel (3˝) für die jeweils zusammengefaßten Zellen (Z1,Z4;Z2,Z5;Z3,Z6) vorgesehen sind.

3. Bleiakkumulator nach Anspruch 2, dadurch gekennzeichnet, daß der Unterdeckel (3′) im wesentlichen flach ausgebildet ist und daß die einzelnen Oberdeckel (3˝) unter Belassung von Zwischenabständen über den Unterdeckel (3′) kappenartig überstehen.

## Claims

1. Lead storage battery with a housing (1) for receiving a plurality of cells (Z1 to Z6) as well as a lid (3), for closing the housing (1), in which between a spaced-apart bottom cover (3′) and an top cover (3˝) there is provided a hollow space (10) for acid separation and which is provided with gas escape openings (14) in each case having an anti-ignition safeguard (15), wherein a number of cells (Z1, Z4; Z2, Z5; Z3, Z6) as part of a total number of cells are in each case combined with a common gas escape opening (14), wherein the different combinations are independent of each other and which has or which in each case has closeable fill and control openings (12) for the cells (Z1 to Z6), **characterised** in that the cells (Z1 to Z6) are arranged in two rows (R1, R2), wherein the adjacent cells (Z1, Z4; Z2, Z5; Z3, Z6) of the rows (R1, R2) are combined, and that in the region where the associated hollow spaces (10) are connected between the cell pairs (Z1, Z4; Z2, Z5; Z3, Z6) the gas escape openings (14) are situated in each case on the longitudinal centre line (L) between the two rows (R1, R2).

2. Lead storage battery according to claim 1, **characterised** in that a plurality of separate top covers (3˝) are provided for the cells (Z1, Z4; Z2, Z5; Z3, Z6) which have in each case been combined.

3. Lead storage battery according to claim 2, **characterised** in that the bottom cover (3′) is essentially flat in design and that the separate top covers (3˝) overlap the lower cover (3′) in a cap-like manner leaving intermediate gaps inbetween.

## Revendications

1. Accumulateur au plomb comportant un carter (1) recevant plusieurs éléments (Z1 à Z6), ainsi qu'un couvercle (3) qui ferme le carter (1) et dans lequel est réalisé, entre un couvercle inférieur (3′) et un couvercle supérieur (3˝) disposé à distance du précédent, un espace creux (10) pour la séparation de l'acide, le couvercle étant pourvu d'ouvertures de dégazage (14) qui comportent chacune une protection d'allumage (15), plusieurs éléments (Z1, Z4; Z2, Z5; Z3, Z6) en tant que partie du nombre total d'éléments, étant à chaque fois regroupés avec une ouverture de dégazage (14) commune, les regroupements étant indépendants les uns des autres, et le couvercle comportant, le cas échéant, pour chacun des éléments (Z1 à Z6), des ouvertures de remplissage et de contrôle (12) pouvant être obturées,
caractérisé en ce que les éléments (Z1 à Z6) sont disposés en deux rangées (R1, R2), les éléments voisins (Z1, Z4; Z2, Z5; Z3, Z6) des rangées (R1, R2) étant regroupés, et en ce que les ouvertures de dégazage (14), dans la zone de jointure des espaces creux (10) correspondants, entre les paires d'éléments (Z1, Z4; Z2, Z5; Z3, Z6), sont situées, pour chaque paire d'éléments, sur la ligne médiane longitudinale (L) entre les deux rangées (R1, R2).

2. Accumulateur au plomb selon la revendication 1, caractérisé en ce que plusieurs couvercles supérieurs (3˝) individuels sont prévus respectivement pour les éléments regroupés (Z1, Z4; Z2, Z5; Z3, Z6).

3. Accumulateur au plomb selon la revendication 2, caractérisé en ce que le couvercle inférieur (3′) est de configuration sensiblement plate, et en ce que les couvercles supérieurs (3˝) individuels, font saillie du couvercle inférieur (3′) à la manière de capuchons, en laissant subsister des espaces intermédiaires entre-eux.
